# EUROPEAN PATENT APPLICATION

(11) **EP 4 250 071 A1**
(43) Date of publication of application: **27.09.2023**
(21) Application number: 20962544.1
(22) Date of filing: 20.11.2020
(51) Int. Cl.: G06F 3/041

(54) **TRANSPARENT DISPLAY HAVING IMPROVED VISIBILITY**

(30) Priority: 19.11.2020 KR 20200155205
(71) Applicant: Msway Technology Co., Ltd., Seoul 08380 (KR)
(72) Inventor: LEE, Min Soo, Seoul 06709 (KR); PARK, Jong Chun, Anyang-si Gyeonggi-do 14025 (KR); JUNG, Su Hyun, Gumi-si Gyeongsangbuk-do 39164 (KR)
(74) Representative: Schmitt-Nilson Schraud Waibel Wohlfrom Patentanwälte Partnerschaft mbB
(86) International application number: PCT/KR2020/016530
(87) International publication number: WO 2022/107938

(57) **Abstract**

Disclosed is a transparent display having improved visibility. The transparent display having improved visibility according to the present invention comprises: a transparent display unit having a transparent material screen display function; a PDLC unit coupled to a second surface of the transparent display unit and controlling transparency; and a first touch unit coupled to a second surface of the PDLC unit and giving a touch function.

## Description

### [Technical Field]

The present disclosure relates to a transparent display having improved visibility.

### [Background Art]

Information displays are being developed in a new way with the development of technology. A transparent display of such information displays has a specific advantage of being able to show information like a background, so it has been in the spotlight, but there are still many technical problems.

Recently, the possibility that a transparent display will be popularized in a transparent AMOLED with the development of AMOLED is increasing, but it is also required to conduct a study for solving several technical problems such as improving tranmissivity and securing visibility.

A transparent display has a characteristic that the rear surface of the display is seen, and there are also various techniques of implementing a transparent display.

A transparent display has a characteristic that contrast variation is large, depending on the surrounding environment, as compared with other displays. Further, when the transmissivity of a transparent display is evaluated, a factor called haze is included other than transparency. It is required to secure contrast and improve haze for visibility of a transparent display.

In a transparent film, when the refractive indexes of layers are different, the path of light traveling through the transparent film bends. In this case, the film is transparent, but entirely looks hazy. The performance of a transparent object is evaluated by quantifying the degree of haze in some cases.

A transparent display also has to have not only high transparency, but good haze so that an object that is seen through a transparent panel can be clearly seen. To this end, it is difficult to remove a difference of refractive index between the components constituting the transparent display. For example, there should be no difference of refractive index between a glass substrate, a transparent electrode, a transparent semiconductor, a transparent insulator, etc.

However, it is difficult to give complete the same refractive due to limitation in selection of substances, so it is required to induce optical design that can compensate for a difference of refractive index.\

### [Disclosure]

### [Technical Problem]

An objective of the present disclosure is to provide a transparent display having improved visibility that can secure contrast using a PDLC and can give a dual function that enables a user to watch the transparent display in a transparent or opaque state using the transmission control characteristic of the PDLC.

### [Technical Solution]

In order to achieve the objective described above, a transparent display having improved visibility according to an embodiment of the present disclosure may comprise: a transparent display unit made of a transparent material and having an image display function; a PDLC unit coupled to a second surface of the transparent display unit and controlling transparency; and a first touch unit coupled to a second surface of the PDLC unit and giving a touch function.

In an embodiment of the present disclosure, the transparent display may further comprise a second touch unit coupled to a first surface of the transparent display unit and giving a touch function.

In an embodiment of the present disclosure, the PDLC unit may comprise: a base layer; a first electrode layer coupled to a second surface of the base layer; a PDLC layer coupled to a second surface of the first electrode layer; and a second electrode layer coupled to a second surface of the PDLC layer.

In an embodiment of the present disclosure, the first touch unit may comprise: a glass layer; an X-axis film layer giving a function for a first-directional touch; a Y-axis film layer giving a function for a second-directional touch perpendicular to the first direction; a first OCA layer coupling the -axis film layer and the Y-axis film layer; and a second OCA layer coupling the Y-axis film layer and the glass layer.

In an embodiment of the present disclosure, the transparent display may comprise: a first switching unit connected to the PDLC unit and controlling voltage application for the PDLC unit; a second switching unit connected to the first touch unit and controlling voltage application for the first touch unit; a voltage control unit controlling a maximum voltage for the first switching unit; and a transmittance control unit secondarily controlling a maximum voltage of the voltage control unit.

### [Advantageous Effects]

The present disclosure has an effect of improving contrast of a transparent display and securing desired definition by controlling whether to give transparency.

### [Description of Drawings]

FIG. 1 shows the entire structure of a transparent display having improved visibility according to an embodiment of the present disclosure.
FIG. 2 shows a detailed structure of the transparent display having improved visibility according to an embodiment of the present disclosure.
FIG. 3 shows an additional structure of the transparent display having improved visibility according to an embodiment of the present disclosure.

### [Mode for Invention]

The present disclosure may be modified in various ways and implemented by various exemplary embodiments, so that specific exemplary embodiments are shown in the drawings and will be described in detail herein. However, it is to be understood that the present disclosure is not limited to the specific exemplary embodiments, but includes all modifications, equivalents, and substitutions included in the spirit and the scope of the present disclosure.

In description of the present disclosure, detailed descriptions of well-known technologies will be omitted not to obscure the description of the present disclosure with unnecessary details.

Hereafter, an embodiment of the present disclosure is described in detail with reference to the accompanying drawings.

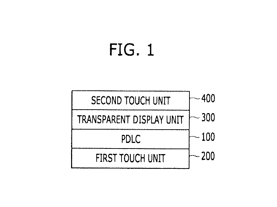

FIG. 1 shows the entire structure of a transparent display having improved visibility according to an embodiment of the present disclosure.

Referring to FIG. 1, a transparent display having improved visibility according to an embodiment of the present disclosure includes a PDLC unit 100, a first touch unit 200, a transparent display unit 300, and a second touch unit 400.

The PDLC unit 100 is composed of a plurality of thin film layers including a PDLC material and may provide a characteristic that it becomes transparent or opaque in accordance with external input.

The first touch unit 200 is composed of a plurality of thin film layers made of a transparent material and coupled to a second side of the PDLC unit 100 and may create and transmit touch input information by a user's hand, etc.

The first touch unit 200 is installed on the rear surface rather than the front surface of the display and may provide a bidirectional input function. The term 'bidirectional input function' was used to show that touch input is possible through not only the front surface, but the rear surface of the display.

The transparent display unit 300 may be composed of a plurality of thin film layers made of a transparent material and coupled to a first surface of the PDLC unit 100. The transparent display unit 300 can display information in one direction or in two directions and visually while providing transparency.

The second touch unit 400 is composed of a plurality of thin film layers made of a transparent material and coupled to a first surface of the transparent display unit 300 and can create and transmit touch input information by a user's hand, etc.

According to the structure configured in this way, the transparent display unit 300 and the PDLC unit 100 are combined, as compared with a single transparent display, so there is an advantage that the limitation of contrast of the transparent display unit can be improved by matching the refractive index of the PDLC unit.

Further, according to the structure of an embodiment of the present disclosure, it is possible to improve definition that is another technical problem of the transparent display unit by controlling the transparency of the PDLC unit 100.

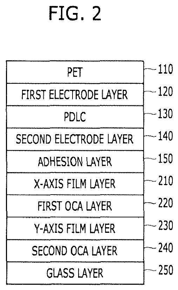

FIG. 2 shows a detailed structure of the transparent display having improved visibility according to an embodiment of the present disclosure.

Referring to FIG. 2, the PDLC unit 100 includes a base layer 110, a first electrode layer 120, a PDLC layer 130, a second electrode layer 140, an adhesion layer 150, an X-axis film layer 210, a first OCA layer 220, a Y-axis film layer 230, a second OCA layer 240, and a glass layer 250.

The base layer 110 is the base of a film layer to be stacked thereon.

The base layer 110 may include an inorganic substance or an organic substance.

The inorganic substance may be any one of glass, quartz, Al2O3, SiC, Si, GaAs, and InP, or a combination thereof, and is not limited thereto.

The organic substance may be selected from kapton foil, polyimide (PI), polyethersulfone (PES), polyacrylate (PAR), polyetherimide (PEI), polyethylene naphthalate (PEN), polyethyleneterephthalate (PET), polyphenylene sulfide (PPS), polyarylate, polycarbonate (PC), cellulose triacetate (CTA), cellulose acetate propionate (CAP), but is not limited thereto.

However, since the present disclosure intends to low resistance and high light transmissivity, it is preferable that the thickness, material (index), etc. of the base layer 110 are selected to be suitable for the intention.

In an embodiment of the present disclosure, the base layer 110 includes polyethyleneterephthalate (PET).

The first electrode layer may include a metal layer and a metal oxide layer.

The metal of the metal layer may include any one of Ag, Cu, Au, Al, Ce, Pr, Nd, Pm, Sm, Eu, Gd, Tb, Dy, Ho, Er, Tm Yb, Lu, Sc, Ti, V, Cr, Mn, Fe, Co, Ni, Zn, Y, Zr, Nb, Mo, Tc, Ru, Rh, Pd, Cd, In, Sn, Hf, Ta, W, Re, Os, Ir, Pt, Tl, Pb, Bi, Ga, Ge, Sb, Ac, Th, and a compound thereof.

Preferably, the metal of the metal layer may include any one of Ag, Pt, Au, which have high conductivity, and a compound thereof.

When silver (Ag) is used for the metal layer, a copper oxide (CuOx) may be used for the metal oxide layer. The metal oxide layer can effectively prevent contact between silver (Ag) and oxygen or water by quickly forming an oxidation film.

It is preferable to form a low-resistance electrode (about 10Ω or less) by appropriately adjust the material and the thickness of the first electrode layer 120. The reason of using a low-resistance electrode is because a high output value to input is provided.

The same material and thickness as the first layer 120 may be applied to the second electrode 140.

Though not shown in the figures, an index matching layer may be additionally included in the PDLC unit 100 to improve transmittance.

The PDLC layer 130 is a layer including a polymer dispersed liquid crystal film. The PLDC film is a film having a characteristic that polymeric crystals therein absorb or scatter light such that the film become opaque when a voltage is not applied, and the polymeric crystals therein are arranged in a voltage application direction and form a structure that transmits light when a voltage is applied such that the film become transparent.

The adhesion layer 150 is a layer coupling the second electrode layer 140 and the X-axis film layer 210 and may be configured using a well-know film adhesion substance.

The X-axis film layer 210 is a layer that gives a function for a first-directional (X-directional) touch.

The Y-axis film layer 230 is a layer that gives a function for a second-directional (Y-directional) touch.

The X-axis film layer 210 and the Y-axis film layer 230 are coupled by the first OCA layer 220.

The first OCA layer 220 is a layer including an OCA film (Optical Clear Adhesive Layer). An OCA film usually has a function of 90% or more transmittance and is usually used an attachment film for displays. An OCA film can connect films having different functions while complementing differences of transparency and refractive index.

The second OCA layer 240 also includes an OCA film and connects the Y-axis film layer 230 and the glass layer 250.

The glass layer 250 can support the components of the touch units by functioning as a base.

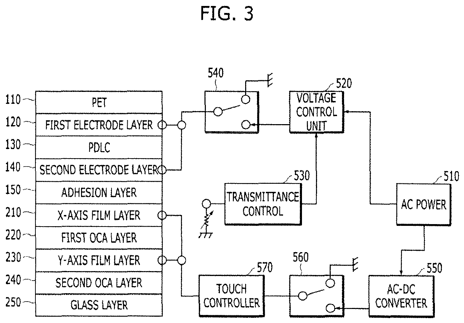

FIG. 3 shows an additional structure of the transparent display having improved visibility according to an embodiment of the present disclosure.

Referring to FIG. 3, the transparent display having improved visibility according to an embodiment of the present disclosure includes a power unit 510, a voltage control unit 520, a transmittance control unit 530, a first switching unit 540, a converter unit 550, a second switching unit 560, and a touch controller unit 570.

The power unit 510 can supply AC power.

The voltage control unit 520, which controls the voltage that is applied to the PDLC unit 100, controls a voltage within about 30 to 100 Vac. The voltage control unit 520, to this end, may include a reduction circuit and a regulation circuit.

The transmittance control unit 530 is connected with the final output terminal of the voltage control unit 520 and includes a variable resistor, thereby being able to minutely adjust a voltage.

The first switching unit 540 can control whether to apply a voltage to the PDLC unit 100. When the first switching unit 540 is closed (on), the PDLC unit 100 enters a transparent transmission mode, and when the first switching unit 540 is opened (off), PDLC unit 100 enters an opaque block mode.

The converter unit 550 can rectify an AC voltage into a DC voltage and provide the DC voltage to the touch control unit 570.

The second switching unit 560 can control whether to apply a voltage to the touch control unit 570. For example, the second switching unit 560 can inactivate touch input on the rear surface when a touch panel is disposed on the front surface of the transparent display. Of course, it is also possible to activate a touch in two directions of the transparent display by closing (on) the second switching unit 560.

The touch control unit 570 may include a configuration that samples capacitive touch inputs on a sample/hold block by activating a sampling signal and that sequentially processes capacitive touch inputs stored in the sample/hold block by sequentially activating output control signals.

In the transparent display having improved visibility according to an embodiment of the present disclosure, all of the component films do not necessarily have the same areas. For example, if the transparent display unit 300 and the second touch unit 400 have an area of 100, the PDLC unit 100 and the first touch unit 200 may be installed to have an area of 50. In this case, the PDLC unit 100 and the first touch unit 200 may occupy (overlap) only a half region of left or right sides of the transparent display unit 300 and the second touch unit 400 or may occupy only a half region of the upper sides or the lower sides.

As another example, the PDLC unit 100, the first touch unit 200, and the second touch unit 400 may be configured to occupy (overlap) only a partial area in comparison to the transparent display unit 300. In detail, the PDLC unit 100, the first touch unit 200, and the second touch unit 400 may be configured to occupy only a portion (e.g., 1/10 area) of the entire display. Alternatively, the PDLC unit 100 and the first touch unit 200, or the PDLC unit 100 and the second touch unit 400 may be configured to occupy only a portion (e.g., 1/10 area) of the entire display. Accordingly, a portion of the entire display is used as a touch panel or a clear touch panel having improved visibility, whereby a portion of the display can be provided as an operation region.

Terms used in the present specification are used only to describe specific exemplary embodiments rather than limiting the present disclosure. It will be further understood that the terms "comprises" or "have" used in this specification, specify the presence of stated features, steps, operations, components, parts, or a combination thereof, but do not preclude the presence or addition of one or more other features, numerals, steps, operations, components, parts, or a combination thereof.

## Claims

1. A transparent display having improved visibility, comprising:
a transparent display unit made of a transparent material and having an image display function;
a PDLC unit coupled to a second surface of the transparent display unit and controlling transparency; and
a first touch unit coupled to a second surface of the PDLC unit and giving a touch function.

2. The transparent display of claim 1, further comprising a second touch unit coupled to a first surface of the transparent display unit and giving a touch function.

3. The transparent display of claim 1, wherein the PDLC unit comprises:
a base layer;
a first electrode layer coupled to a second surface of the base layer;
a PDLC layer coupled to a second surface of the first electrode layer; and
a second electrode layer coupled to a second surface of the PDLC layer.

4. The transparent display of claim 3, wherein the first touch unit comprises:
a glass layer;
an X-axis film layer giving a function for a first-directional touch;
a Y-axis film layer giving a function for a second-directional touch perpendicular to the first direction;
a first OCA layer coupling the -axis film layer and the Y-axis film layer; and
a second OCA layer coupling the Y-axis film layer and the glass layer.

5. The transparent display of claim 1, comprising:
a first switching unit connected to the PDLC unit and controlling voltage application for the PDLC unit;
a second switching unit connected to the first touch unit and controlling voltage application for the first touch unit;
a voltage control unit controlling a maximum voltage for the first switching unit; and
a transmittance control unit secondarily controlling a maximum voltage of the voltage control unit.
